# EUROPEAN PATENT SPECIFICATION

(11) **EP 0 923 675 B1**
(45) Date of publication and mention of the grant of the patent: **16.08.2001**
(21) Application number: 97940228.6
(22) Date of filing: 03.09.1997
(51) Int. Cl.: F16B 5/06, F16B 2/24

(54) **GRATING HOLD-DOWN CLIP**
GITTERROST-HALTEKLAMMER
PINCE DE RETENUE DE GRILLE

(30) Priority: 04.09.1996 GB 9618373; 13.01.1997 GB 9700577
(43) Date of publication of application: 23.06.1999
(73) Proprietor: Glynwed Consumer and Foodservice Products Limited, Sheldon, Birmingham B26 3AZ (GB)
(72) Inventor: HARVEY, Simon, Robert, Leeds LS19 6BZ (GB); KLIPPEL, Simon, Francis, Knaresborough HG5 9HY (GB); GILL, Neil, Frank, Shipley BD18 1NS (GB); MEREDITH, Patrick, Gerald, Hawksworth Leeds LS20 8NX (GB)
(74) Representative: Orr, William McLean
(86) International application number: GB9702361
(87) International publication number: WO9810195

(56) References cited:
- DE-A- 2 500 525
- DE-U- 9 203 133
- GB-A- 2 135 044
- US-A- 4 605 978
- "Abrasive EMC Gasket Clip" RESEARCH DISCLOSURE, no. 319, 1 November 1990, XP002051790

## Description

This invention relates to a hold-down clip for use with a grating, in order to secure the grating to an underlying structure of support beams.

Gratings (and grids) are used widely in industry as support surfaces e.g. on walkways alongside plant and machinery, fire escapes, decks on oil rigs, helicopter platforms and the like, and have the advantage of being manufactured in standard lengths and widths, and in being relatively easily assembled on site with support beams using a number of different designs of releasable fasteners.

Gratings are usually formed with a number of identical cells of rectangular, and more usually square cross section and comprise parallel longitudinal metal strips and transverse metal strips which usually extend perpendicular to the longitudinal strips. The metal strips are usually welded together and the longitudinal strips stand edge-on to the supporting surfaces of the support beams. The supporting surfaces are usually generally horizontal, and the strips are therefore contained in generally vertical planes. The transverse strips are of smaller width than the longitudinal strips, and interconnect the upper edges of the longitudinal strips so that together the longitudinal and transverse strips form a reliable common support surface.

In marine use, the cells allow storm water rapidly to drain through the cells, while leaving a reliable support surface for personnel. The cells also allow rain water to be drained.

The support surfaces on which the gratings rest are usually formed by the top surfaces of flanged beams e.g. angle, channel or I-beams, and the clips used to hold-down the gratings engage downwardly onto one or more of the cells of the grating, and also engage with the undersides of the flanged beams.

Existing designs of clip take many forms, one of which includes a saddle type of device which can seat itself into one or more of the cells, a clamping portion to engage the underside of the flange, and a threaded fastener which extends downwardly throught eh saddle and the clamping portion. The fastener may make threaded engagement with the clamping portion, or could pass through it so that a fastener nut can be engaged on the projecting threaded end. Tightening of the fastener then clamps the grating to the flange.

Evidently, the use of this existing form of clip requires careful manual manipulation of the component parts, which is (a) time consuming, (b) an awkward task to complete (which may be in adverse and exposed weather conditions) and (c) requires at least two separate assembly operations carried out by manual manipulation.

The invention seeks to simplify the assembly operation by providing a one-piece clip configuration and which avoids use of a threaded fastener to complete the operation.

It is known from GB-A-2 135 044 to provide a hold-down clip having a U-shape with limbs having bent portions at the free ends, and which is used in order to connect a louvre to a vertical mullion, and in which the clip grips a flange of the louvre, and engages through an opening in the mullion, in order to mount the louvre on the mullion. The U-shaped formation of the clip is formed by a pair of parallel smooth limbs, and which lie alongside respective parts of the flange of the louvre, and the back face of the mullion, after the clip has been rotated to the fully assembled position.

In this known arrangement, the clip is made of resilient and relatively light weight material, and serves mainly to locate the flange of the louvre adjacent to the mullion. However, to provide vertical support, it is necessary to provide saw tooth shaped louvre supports, which are secured to the mullion, and which form the major vertical support for the louvre.

It is also known from DE-A-2 500 525 to provide a U-shaped clip, having parallel opposed limb portions, which also are smooth and undeformed, and to provide bent ends at the free ends of each limb. This clip is used to join together adjacent vertical strips of two separate open meshed flooring together.

The present invention provides a one-piece clip configuration which is more robust in construction than the known U-shaped clip formations, and which has characterising features which facilitate part rotational assembly of the clip with a fulcrum type of inter-engagement with the cells of the grating, thereby allowing a downward pressing or impact force to be utilised to complete the assembly.

According to one aspect of the invention there is provided a hold-down clip for use with a metal grating formed of longitudinal
strips and transverse strips joined together to form a number of cells of generally rectangular cross section, said clip being operable to secure one or more cells of the grating to a flange of an underlying support beam, in which the clip comprises:
(a) a generally U-shaped one-piece configuration;
(b) a pair of opposed first limb and second limb forming facing sides of the generally U-shaped configuration;
(c) a first bent portion at a free end of the first limb and which is inclined in a direction towards the second limb; and
(d) a second bent portion at a free end of the second limb and which is inclined in a direction away from the first limb;
characterised in that the first limb of the clip has an inward projection, located close to said first bent portion, such projection being capable of engaging with the top edge of one of the transverse walls of one of the cells in order to act as a fulcrum during the assembly of the clip to secure one or more cells of the grating to the flange of the underlying support beam.

A clip according to the invention therefore only requires manual handling for the initial presentation of the clip to a particular cell, but thereafter (following engagement of the inward projection with the top edge of one of the transverse walls of one of the cells) the clip can be rotated to the fully assembled position by any suitable means which involves application of a downward pressing or impact force. This avoids any necessity to carry out manipulation operations below the surface of the grating e.g. to complete the clamping of a threaded fastener as per the known clips, and the assembly can be completed simply by an operative stamping downwardly onto the clip.

The inward projection may be repeated, or mirrored, along the underside of the upper surface of the clip, so as to provide bi-directional restraint i.e. in which one projection is engageable with a respective strip of the grating so as to resist movement in one direction, whereas the additional projection is engageable with an adjacent strip of the grating so as to resist movement in an opposite direction.

The second bent portion at the free end of the second limb usually will come into engagement with the side edge of the flange, when the clip is manipulated to an intermediate position, and then slides downwardly over this edge as the final assembly operation takes place, whereby to guide the second limb to move into engagement with the underside of the flange as the clip carries out its rotation to the fully assembled position.

Usually, in assembly of a grating to the top flanges of a pair of parallel and laterally spaced support beams, clips will be located at reasonably uniform intervals along the length of each flange edge e.g. a clip being provided every 20mm, so as to provide reliable securement of the grating to the support beams.

Dis-assembly will not often be required, but when necessary can be carried out simply using a simple tool, such as a screwdriver, to engage under the firm limb of each clip, and operated to lever the clip upwardly in a pivoting type of movement to take-up the intermediate position, and then the preliminary mounting and location position, whereby the clip can then be manually removed easily when required.

According to a further aspect of the invention there is provided a method of assembly of a grating to the flanges of laterally spaced underlying parallel support beams, using a plurality of hold-down clips, in which:
(a) the grating is formed of longitudinal strips and transverse strips joined together to form a number of cells of generally rectangular cross section; and
(b) each clip is operable to secure one or more cells of the grating to a flange of an underlying support beam, said clip comprising; a generally U-shaped one-piece configuration; a pair of opposed first and second limbs forming facing sides of the generally U-shaped configuration; a first bent portion at a free end of the first limb and which is inclined in a direction towards the second limb and which is inclined in a direction away from the first limb, and an inward projection on the firm limb located close to said bent portion;
   in which the method comprises:
(a) carrying out initial assembly of each clip with a pair of adjacent transverse strips of a cell of the grating, and with said cell being located above and near to one edge of the underlying flange of one of the support beams; and
(b) causing each clip to be partly rotated from the initial assembled position so that said inward projection engages with the top edge of one of the transverse walls of one of the cells and thereby acts as a fulcrum, and then applying a downward pressing or impact force to the clip which causes the clip to take up a fully assembled position in which the first limb overlies the transverse strips of the cell and the second limb partly underlies the flange.

Preferred embodiments of the invention will now be described in detail, by way of example only, with reference to the accompanying drawings, in which:
Figure 1 is a diagrammatic plan view of a grating positioned on top flanges of a pair of laterally spaced parallel underlying support beams, and to be clamped thereto by using a plurality of hold-down clips according to the invention;
Figure 2 is an end view of the support beams and the grating, and showing two different embodiments of hold-down clip for clamping the grating to the support beams;
Figure 3 is a diagrammatic and perspective illustration of one cell of the grating; formed by two longitudinally extending support strips and two transverse support strips interconnecting the upper edges of the longitudinal strips, such cell being adapted to receive the support clip so as to be held-down to the underlying flange of the support beam by the clip;
Figures 4, 5 and 6 show, schematically, successive stages of (i) locating a clip on a pair of adjacent transverse support strips, (ii) carrying out initial manipulation to an intermediate position, and (iii) final assembly respectively;
Figures 7a, b and c are successive stages of location, manipulation and assembly of one preferred example of design of a hold-down clip according to the invention;
Figures 8a and 8b shows two assembly stages using a modified embodiment of the invention;
Figures 9a to 9e show five views of a further example of hold-down clip according to the invention;
Figures 10a to 10e show five views of a further modified design of a hold-down clip according to the invention; and,
Figures 11a to 11e show five views of a still further modified embodiment of the invention.

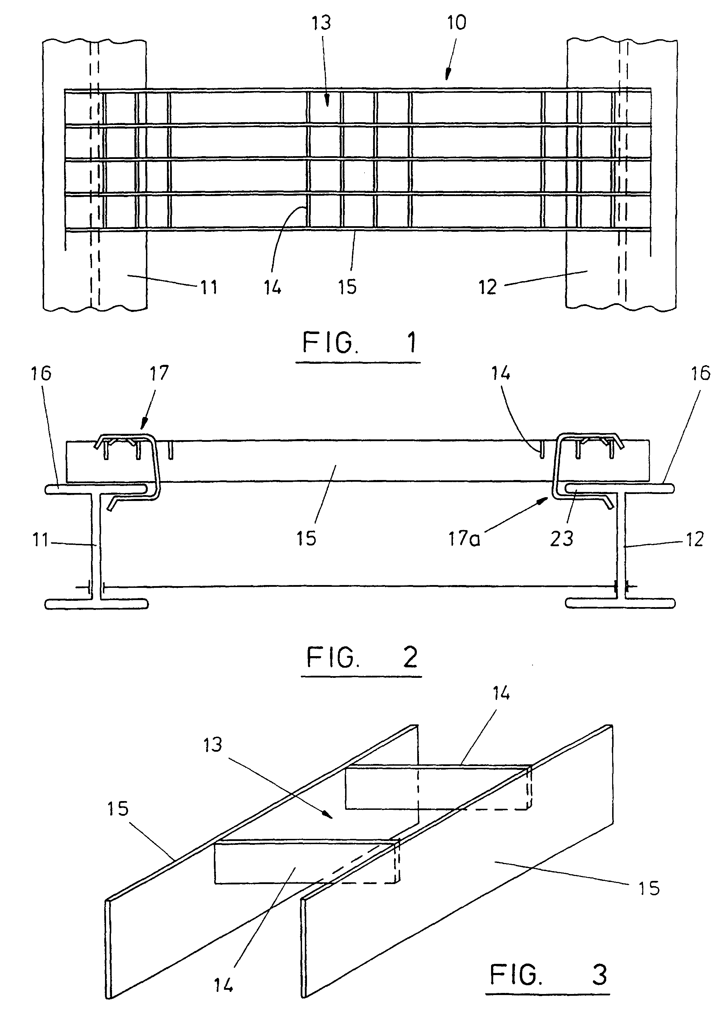

Referring first to Figures 1 and 2 of the drawings, there is shown a grating which is designated generally by the reference 10, and which is intended to be used to form a substantially horizontal support surface e.g. a walkway, and to be assembled on site on underlying parallel support beams, two of which are shown by reference 11 and 12. The beams 11 and 12 are flanged beams, and in the illustrated example are I-beams. However, other designs of flanged beams may be used to form the support beams, including angles, and channels.

The grating 10 is formed with a number of identical cells 13 which are shown being of square cross section, although rectangular cross section cells also may be provided. Each cell 13 is defined between an adjacent pair of transverse connecting strips 14, and a pair of longitudinally extending strips 15. The strips 14 and 15 are contained in generally vertical planes, and the longitudinal strips 15 are of greater depth, so that they can be supported edge-on to the supporting surfaces formed by flanges 16 of beams 11 and 12. The transverse strips 14 are of smaller width, and interconnect the upper edges of the longitudinal strips 15. In some designs, the upper edges of the transverse strips 14 may be ribbed or castellated to improve grip by the boots or shoes of personnel walking over the grating.

Figure 3 shows schematically and in perspective illustration a cell 13 formed between opposed pairs of strips 14 and 15.

Examples of hold-down clip according to the invention will now be described, which can be used in order to hold-down the grating 10 on the supporting surfaces of the beams 11 and 12. The examples of the invention are clips of one-piece configuration, and which avoid use of a threaded fastener to complete the operation.

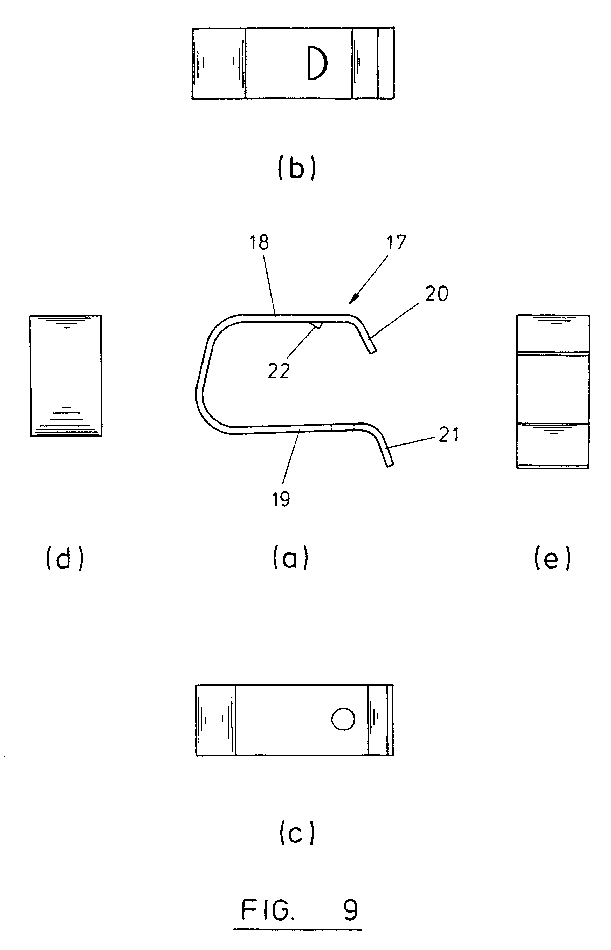

The clip comprises a generally U-shaped one-piece configuration, as can be seen in a simplified embodiment of clip shown in Figure 9, and designated generally by reference 17. The clip 17 has a pair of opposed first and second limbs 18 and 19 respectively, which form facing sides of the generally U-shaped configuration. A first bent portion 20 is formed at a free end of the first limb 18, and which is inclined in a direction towards the second limb 19. A second bent portion 21 is formed at a free end of the second limb 19, and which is inclined in a direction away from the first limb 18. The embodiment of Figure 9 also has a projection 22 which is stamped or otherwise deformed inwardly of the first limb 18, and located near to the first bent portion 20. Optionally, an additional projection 22a may be provided.

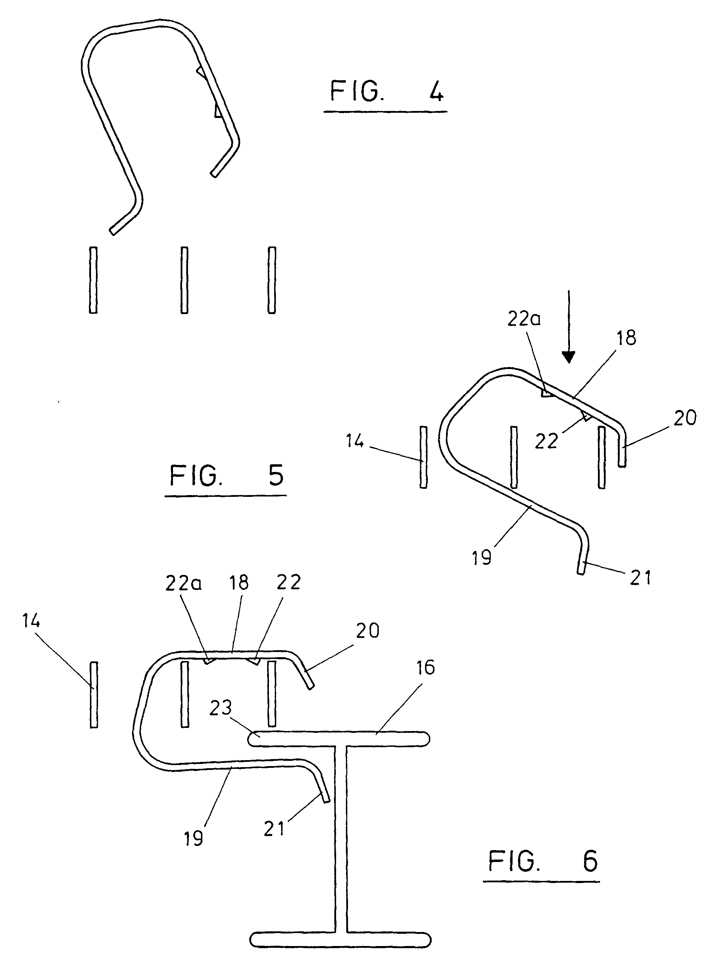

The means by which the clip 17 can be used will be described in more detail below, with reference to Figures 4 to 6, and Figure 7 of the drawings.

Essentially, all preferred embodiments of clip according to the invention are designed in such a way that the following sequence of steps of assembly take place:
1. the clip is capable of taking-up a preliminary mounting and locating position on a pair of adjacent transverse strips 14 of a cell 13 of the grating, which is positioned above and near to one edge 23 of flange 16;
2. the clip is partly rotatable from the preliminary mounting and location position to an intermediate position, whereby the first bent portion 20 lies alongside one of the transverse strips 14 and the second bent portion 21 is engageable with the edge 23 of the flange 16;
3. the clip is partly rotatable from the intermediate position by a downward pressing or impact force so as to take-up a fully assembled position in which the first limb overlies the transverse strips 14 so as to lie substantially in the plane of the grating, and the second limb 19 partly engages the underside of the flange 16.

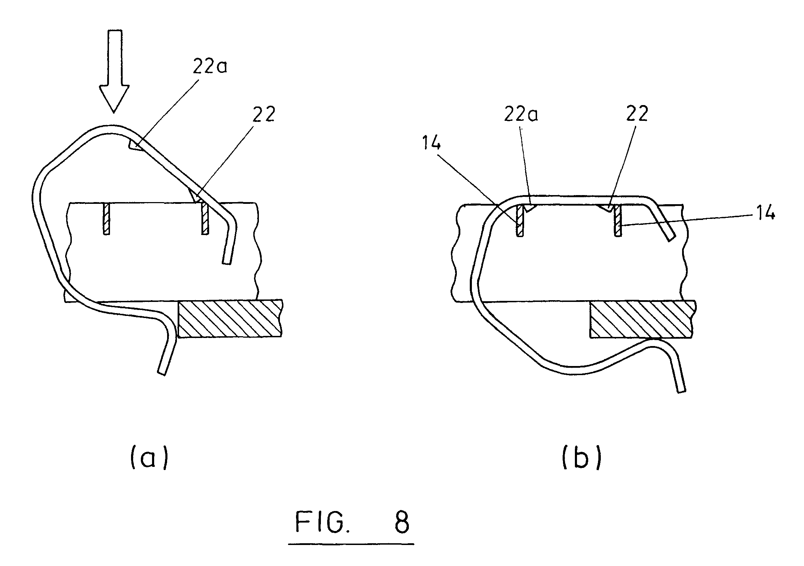

Alternatively, stages 1 and 2 may be carried in one single location and manipulation operation, as shown in Figure 8.

Figures 4 to 6 show successive stages in: initial mounting and location; manipulation to the intermediate position; and rotation to the fully assembled position. This is a schematic illustration applicable to the embodiment of clip 17 shown in Figure 9.

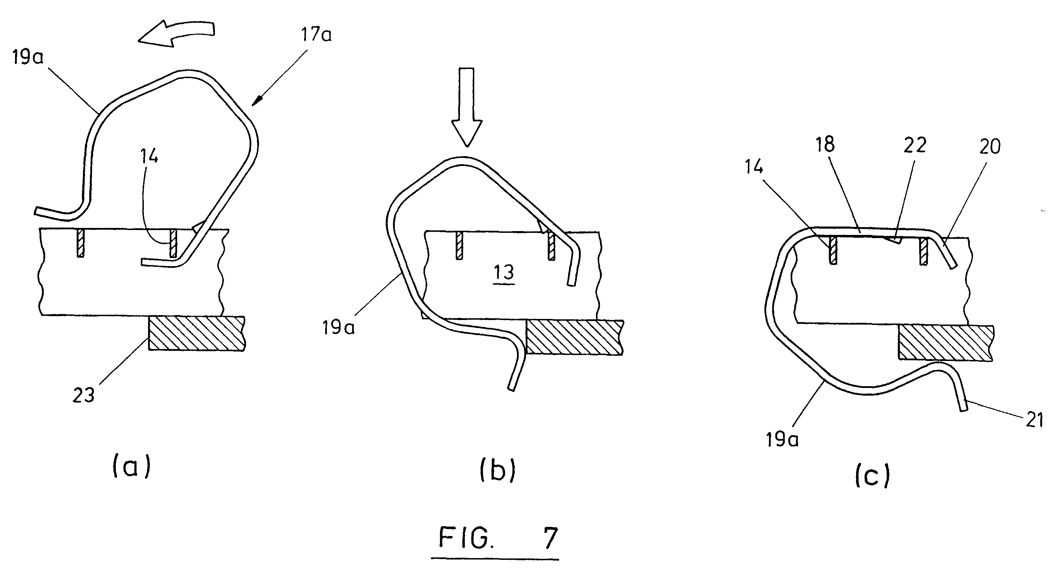

Figures 7a to c show successive stages applicable to use of a modified design of hold-down clip 17a according to the invention, in which the second limb, shown by reference 19a, includes a curved deformation, to give the second limb additional resilience, and thereby to facilitate the initial assembly, and to provide a reliable securement of the clip in the hold-down position.

Preferred embodiments of the invention are provided with the inward projection 22, which assists in the initial guiding of the clip both to the initial mounting and location position, and also to manipulation to the intermediate position. It is engageable with one of the transverse strips or walls 14, and when the downward force is applied, the projection 22 acts as a fulcrum, whereby the downward force applied to the clip is converted into rotary motion so that the clip can be sprung into the fully assembled position. However, in some examples in accordance with the invention, the projection 22 may be omitted. Alternatively, the additional projection 22a is provided, so that the clip has bi-directional restraint when installed i.e. projection 22 engages one of the strips 14 to resist movement in one direction, and projection 22a engages the adjacent strip 14 to resist movement in the opposite direction.

The application of downward force to the clip may be carried out by a hammer or mallet, or simply by an operative stamping on the clip, and which can easily be done as he walks along the partly assembled grating.

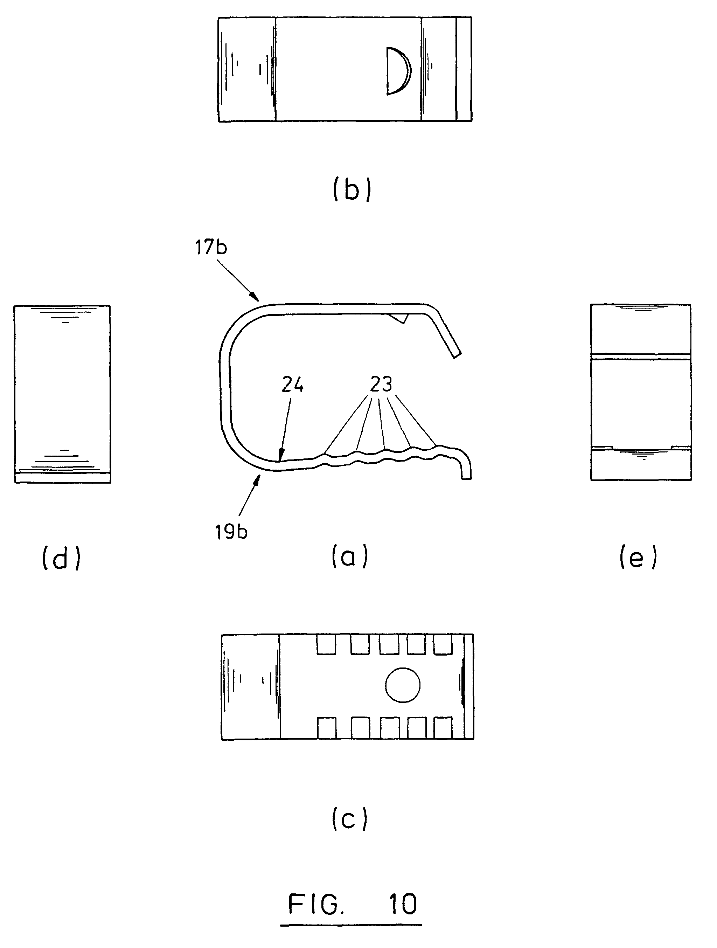

Figure 10 shows a further modified design of a hold-down clip 17b according to the invention, in which the second limb, shown by reference 19b, includes a number of identations 23 proving a serrated upper surface 24 to lower limb 19b, to enhance the grip performance of the lower limb against the underside of the flange, when fully assembled in the hold-down position. The shape geometry of the identations can be any providing enhanced grip, but preferably can vary from having a smooth, semi-circular profile, to a triangular profile having a pointed vertex. There can be any number of indentations provided on the lower limb and they may partially or fully extend across the lower limb, as required.

When disassembly of one or more clips is required, it is a simple matter to prise the clip upwardly so as to move from the position of Figure 7c to the position of Figure 7b (the intermediate position) by insertion of a screwdriver or other manipulating prong below the first limb 18, and then exerting an upwardly levering action.

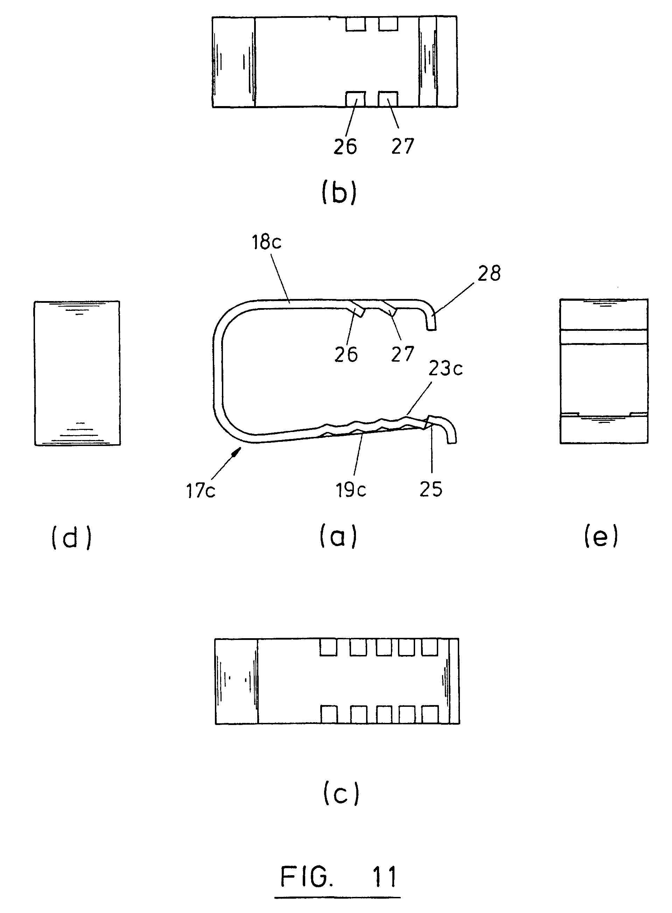

Referring now to Figure 11, a still further modified embodiment of the invention is illustrated, and showing further variation of the design of the embodiment of Figure 10. The hold-down clip is designated generally by reference 17c, and has further design modification to lower limb 19c and upper limb 18c. The second or lower limb 19c has indentations 23c, which enhance the grip performance of the lower limb against the underside of the flange, when fully assembled in the hold-down position. To further enhance the grip, the generally wavy indentations 23c terminate in a hooked end 25, to give improved gripping engagement with a flange of the steelwork.

The first or upper limb 18c has a pair of down-turned tabs 26 and 27, spaced from the down-turned free end 28 of the limbs. The tabs 26 and 27 are formed by deformation from the side edges of the upper limb 18c, as shown in Figure 11b. These tabs 26 and 27, acting in conjunction with down-turned end 28, provide further possibility of adjustment, during installation and assembly, to suit different designs of grid. This is permitted by variation in the extent of adjustment longitudinally of the upper limb 18c, backwards or forwards, to achieve reliable engagement with the flanges of the adjoining steelwork.

## Claims

1. A hold-down clip for use with a metal grating (10) formed of longitudinal strips (15) and transverse strips (14) joined together to form a number of cells (13) of generally rectangular cross section, said clip being operable to secure one or more cells of the grating (10) to a flange (16) of an underlying support beam (11, 12), in which the clip comprises:
(a) a generally U-shaped one-piece configuration;
(b) a pair of opposed first limb (18) and second limb(19) forming facing sides of the generally U-shaped configuration;
(c) a first bent portion (20) at a free end of the first limb (18) and which is inclined in a direction towards the second limb (19); and
(d) a second bent portion (21) at a free end of the second limb (19) and which is inclined in a direction away from the first limb (18);
characterised in that the first limb (18) of the clip has an inward projection (22), located close to said first bent portion (20), such projection being capable of engaging with the top edge of one of the transverse strips (14) of one of the cells (13) in order to act as a fulcrum during the assembly of the clip to secure one or more cells of the grating (10) to the flange (16) of the underlying support beam (11, 12).

2. A clip according to claim 1, characterised in that the second limb (19b) is formed with gripping formations (23) to enhance the grip performance of the second limb against the underside of the flange (16) of the underlying support beam (11, 12).

3. A clip according to claim 1 or 2, characterised in that the first limb (18) of the clip has a first inward projection (22) which is engageable with a respective strip (14) of the grating (10) so as to resist movement in one direction, and a second inward projection (22a) to engage with an adjacent strip of the grating (10) so as to resist movement in an opposite direction.

4. A clip according to claim 3, characterised in that the first inward projection (22) extends inwardly towards the second limb (19), and also in a direction towards the first bent portion (20), and the second inward projection (22) extends inwardly and also in a direction away from said first bent portion (20).

5. A clip according to any one of the preceding claims, characterised in that the first limb (18c) has a down-turned free end (28), and a pair of tabs (26 and 27) spaced from the free end (28) and extending inwardly towards the second limb (19c), and also extending in a direction towards said free end (28), the tabs (26 and 27) being spaced apart to permit the longitudinal adjustment of the first limb (18c) during assembly

6. A clip according to any one of the preceding claims, characterised in that the second limb (19c) has a hooked end (25) to have gripping engagement with said flange (16) of the underlying support beam (11, 12)

7. A method of assembly of a grating (10) to the flanges (16) of laterally spaced underlying parallel support beams (11, 12), using a plurality of hold-down clips (17), in which:
(a) the grating (10) is formed of longitudinal strips (15) and transverse strips (14) joined together to form a number of cells (13) of generally rectangular cross section; and
(b) each clip (17) is operable to secure one or more cells (13) of the grating (10) to a flange (16) of an underlying support beam (11, 12), said clip comprising; a generally U-shaped one-piece configuration; a pair of opposed first and second limbs (18, 19) forming facing sides of the generally U-shaped configuration; a first bent portion (20) at a free end of the first limb (17) and which is inclined in a direction towards the second limb (19) and which is inclined in a direction away from the firm limb (18), and an inward projection (22) on the first limb (18) located close to said bent portion (20);
in which the method comprises:
(a) carrying out initial assembly of each clip (17) with a pair of adjacent transverse strips (14) of a cell (13) of the grating (10), and with said cell (13) being located above and near to one edge (23) of the underlying flange (16) of one of the support beams (11, 12); and
(b) causing each clip to be partly rotated from the initial assembled position so that said inward projection (22) engages with the top edge of one of the transverse walls of one of the cells (13) and thereby acts as a fulcrum, and then applying a downward pressing or impact force to the clip which causes the clip to take up a fully assembled position in which the first limb (18) overlies the transverse strips (14) of the cell (13) and the second limb (19) partly underlies the flange (16).

## Patentansprüche

1. Niederhalteklammer für ein Metallgitter (10), das aus Längsstreifen (15) und Querstreifen (14) gebildet ist, die zum Bilden von mehreren Zellen (13) mit einem im wesentlichen rechtwinkligen Querschnitt miteinander verbunden sind, wobei die Klammer mindestens eine Zelle des Gitters (10) an einem Flansch (16) eines darunter liegenden Tragbalkens (11, 12) befestigen kann, wobei die Klammer aufweist:
a) eine im wesentlichen U-förmige einteilige Ausgestaltung;
b) zwei gegenüberliegende Schenkel, einen ersten Schenkel (18) und einen zweiten Schenkel (19), die gegenüberliegende Seiten der im wesentlichen U-förmigen Ausgestaltung bilden;
c) einen ersten Schenkelabschnitt (20) am freien Ende des ersten Schenkels (18), der in Richtung des zweiten Schenkels (19) geneigt ist; und
d) einen zweiten Schenkelabschnitt (21) an dem freien Ende des zweiten Schenkels (19), der weg von dem ersten Schenkel (18) geneigt ist;
dadurch gekennzeichnet, dass
der erste Schenkel (18) der Klammer einen nach innen gerichteten Vorsprung (22) aufweist, der nahe dem ersten Schenkelabschnitt (20) angeordnet ist, wobei dieser Vorsprung in Eingriff mit der oberen Kante einer der Querstreifen (14) einer der Zellen (13) gelangen kann, um als Drehpunkt beim Anbringen der Klammer für ein Sichern mindestens einer Zelle des Gitters (10) an dem Flansch (16) des darunter liegenden Tragbalkens (11, 12) zu agieren.

2. Klammer nach Anspruch 1, dadurch gekennzeichnet, dass der zweite Schenkel (19b) mit Haftstrukturen (23) für eine Vergrößerung der Haftleistung des zweiten Schenkels gegen die Unterseite des Flansches (16) des darunter liegenden Tragbalkens (11, 12) gebildet ist.

3. Klammer nach einem der Ansprüche 1 oder 2, dadurch gekennzeichnet, dass der erste Schenkel (18) der Klammer einen ersten nach innen gerichteten Vorsprung (22), der mit einem entsprechenden Streifen (14) des Gitters (10) in Eingriff gelangen kann, um einer Bewegung in einer Richtung entgegenzuwirken, und einen zweiten nach innen gerichteten Vorsprung (22a) aufweist, um einer Bewegung in entgegengesetzter Richtung entgegenzuwirken.

4. Klammer nach Anspruch 3, dadurch gekennzeichnet, dass sich der erste nach innen gerichtete Vorsprung (22) nach innen in Richtung des zweiten Schenkels (19) und zusätzlich in Richtung des ersten Schenkelabschnitts (20) erstreckt, und dass sich der zweite nach innen gerichtete Vorsprung (22a) nach innen und zusätzlich weg von dem ersten Schenkelabschnitt (20) erstreckt.

5. Klammer nach einem der vorhergehenden Ansprüche, dadurch gekennzeichnet, dass der erste Schenkel (18c) ein nach unten gedrehtes freies Ende (28) und zwei Vorsprünge (26 und 27) aufweist, die von dem freien Ende (28) beabstandet sind und sich nach innen in Richtung des zweiten Schenkels (19c) und zusätzlich in Richtung des freien Endes (28) erstrecken, wobei die Vorsprünge (26 und 27) für eine Längseinstellung des ersten Schenkels (18c) beim Anbringen voneinander beabstandet sind.

6. Klammer nach einem der vorhergehenden Ansprüche, dadurch gekennzeichnet, dass der zweite Schenkel (19c) ein hakenförmiges Ende (25) für einen Hafteingriff mit dem Flansch (16) des darunter liegenden Tragbalkens (11, 12) aufweist.

7. Verfahren für ein Anbringen eines Gitters (10) an Flansche (16) seitlich beabstandeter, unterliegender Parallel-Tragbalken (11, 12) mittels mehreren Niederhalte-klammern (17), wobei:
a) das Gitter (10) aus Längsstreifen (15) und Querstreifen (14) gebildet wird, die zum Bilden von mehreren Zellen (13) mit einem im wesentlichen rechtwinkligen Querschnitt miteinander verbunden werden; und wobei
b) jede Klammer (17) mindestens eine Zelle (13) des Gitters (10) an eine Flansch (16) eines darunter liegenden Tragbalkens (11, 12) befestigen kann, wobei die Klammer aufweist: eine im wesentlichen U-förmige einteilige Ausgestaltung; zwei gegenüberliegende Schenkel, einen ersten Schenkel (18) und einen zweiten Schenkel (19), die gegenüberliegende Seiten der im allgemeinen U-förmigen Ausgestaltung bilden; einen ersten Schenkelabschnitt (20) am freien Ende des ersten Schenkels (18), der in Richtung des zweiten Schenkels (19) und weg von dem ersten Schenkel (18) geneigt ist; und einen nach innen gerichteten Vorsprung (22) auf dem ersten Schenkel (18), der nahe dem Schenkelabschnitt (20) angeordnet ist;
wobei das Verfahren ferner die Schritte umfasst:
a) anfängliches Zusammenbauen jeder Klammer (17) mit zwei benachbarten Längsstreifen (14) einer Zelle (13) des Gitters (10) und mit der Zelle (13), die oberhalb und nahe einer Kante 123) des darunter liegenden Flansches (16) eines der Tragbalken (11, 12) angeordnet wird; und
b) teilweise Drehen jeder Klammer von der anfänglichen Zusammenbaustellung derart, dass der nach innen gerichtete Vorsprung (22) mit der oberen Kante einer der Längswände einer der Zellen (13) in Eingriff gelangt und dadurch als Drehpunkt agiert, und danach Anlegen eines nach unten gerichteten Druckes oder einer Stoßkraft an die Klammer, wodurch die Klammer eine vollständig zusammengebaute Stellung einnimmt, in der der erste Schenkel (18) die Längsstreifen (14) der Zelle (13) überlagert und der zweite Schenkel (19) teilweise unter dem Flansch (16) liegt.

## Revendications

1. Pince de retenue destinée à être utilisée avec une grille métallique (10) constituée de bandes longitudinales (15) et de bandes transversales (14) assemblées de façon à former un nombre de cellules (13) de section globalement rectangulaire, cette pince permettant de fixer une ou plusieurs cellules de la grille (10) à la bride (16) d'une barre de soutien sous-jacente (11, 12), la pince comprenant :
(a) une structure en une pièce globalement en forme de U ;
(b) une paire de premier et de second bras opposés (18 et 19) constituant les côtés opposés de la structure en U ;
(c) une première section courbe (20) située à une extrémité libre du premier bras (18) et inclinée vers le second bras (19) ;
(d) une seconde section courbe (21) située à une extrémité libre du second bras (19) et inclinée dans une direction opposée au premier bras (18) ;
caractérisée en ce que le premier bras (18) de la pince possède une saillie orientée vers l'intérieur (22), proche de la première section courbe (20), cette saillie étant susceptible de coopérer avec le bord supérieur de l'une des bandes transversales (14) de l'une des cellules (13) afin de jouer le rôle de point d'appui lors du montage de la pince visant à fixer une ou plusieurs cellules de la grille (10) sur la bride (16) de la barre de soutien sous-jacente (11, 12).

2. Pince selon la revendication 1, caractérisée en ce que le deuxième bras (19b) présente des formations de retenue (23) visant à renforcer la fixation du deuxième bras contre la face inférieure de la bride (16) de la barre de soutien sous-jacente (11, 12).

3. Pince selon la revendication 1 ou 2, caractérisée en ce que le premier bras (18) de la pince possède une première saillie orientée vers l'intérieur (22) susceptible de coopérer avec une bande (14) correspondante de la grille (10) afin de résister à un déplacement dans une direction, et une seconde saillie orientée vers l'intérieur (22a) destinée à coopérer avec une bande adjacente de la grille (10), afin de résister à un déplacement dans une direction opposée.

4. Pince selon la revendication 3, caractérisée en ce que la première saillie orientée vers l'intérieur (22) s'étend vers l'intérieur en direction du deuxième bras (19) et également en direction de la première section courbe (20), et la deuxième saillie orientée vers l'intérieur (22) s'étend vers l'intérieur et également dans une direction opposée à la première section courbe (20).

5. Pince selon l'une quelconque des revendications précédentes, caractérisée en ce que le premier bras (18c) présente une extrémité libre tournée vers le bas (28) et une paire de pattes (26 et 27) espacées de l'extrémité libre (28) et s'étendant vers l'intérieur, en direction du deuxième bras (19c), et s'étendant également en direction de cette extrémité libre (28), les pattes (26 et 27) étant espacées l'une de l'autre pour permettre l'ajustement longitudinal du premier bras (18c) lors du montage.

6. Pince selon l'une quelconque des revendications précédentes, caractérisée en ce que le deuxième bras (19c) possède une extrémité en crochet (25) pour lui permettre de saisir la bride (16) de la barre de soutien sous-jacente (11, 12).

7. Procédé de montage d'une grille (10) sur les brides (16) de barres de soutien parallèles sous-jacentes (11, 12), espacées latéralement, utilisant une pluralité de pinces de retenue (17), dans lequel :
a) la grille (10) est constituée de bandes longitudinales (15) et de bandes transversales (14) assemblées de façon à former un nombre de cellules (13) de section globalement rectangulaires ; et
b) chaque pince (17) permet de fixer une ou plusieurs cellules (13) de la grille (10) à une bride (16) d'une barre de soutien sous-jacente (11, 12), la pince comprenant : une structure en une pièce globalement en forme de U ; une paire de premier et de second bras opposés (18 et 19) constituant les côtés opposés de la structure globalement en forme de U ; une première section courbe (20) située à une extrémité libre du premier bras (18) et inclinée vers le second bras (19) ; une seconde section courbe (21) située à une extrémité libre du second bras (19) et inclinée dans une direction opposée au premier bras (18), et une saillie orientée vers l'intérieur (22), formée sur le premier bras (18), située à proximité de la première section courbe (20) ;
le procédé comprenant :
(a) l'assemblage initial de chaque pince (17) avec une paire de bandes transversales adjacentes (14) d'une cellule (13) de la grille (10), cette cellule (13) étant située au-dessus et à proximité d'un bord (23) de la bride sous-jacente (16) de l'une des barres de soutien (11, 12) ; et
(b) la rotation partielle de chaque pince, à partir de la position assemblée initiale, afin que la saillie orientée vers l'intérieur (22) coopère avec le bord supérieur de l'une des parois transversales de l'une des cellules (13) et serve ainsi de point d'appui, puis l'exercice d'une pression vers le bas ou d'une force d'impact sur la pince pour que la pince se place en position totalement assemblée dans laquelle le premier bras (18) repose sur les bandes transversales (14) de la cellule (13) et le second bras (19) est placé partiellement sous la bride (16).
